**Europäisches Patentamt**

**European Patent Office**

**Office européen des brevets**

(11) Publication number: **0 215 749**
**B1**

# (12) EUROPEAN PATENT SPECIFICATION

(45) Date of publication of patent specification: **14.03.90**

(21) Application number: **86830249.8**

(22) Date of filing: **09.09.86**

(51) Int. Cl.⁵: **A 47 G 25/32**

(54) **Hook for coat-hangers equipped with a double-jointed supporting base.**

(30) Priority: **16.09.85 IT 57885 u**

(43) Date of publication of application:
**25.03.87 Bulletin 87/13**

(45) Publication of the grant of the patent:
**14.03.90 Bulletin 90/11**

(84) Designated Contracting States:
**AT BE CH DE FR GB LI LU NL SE**

(56) References cited:
**FR-A-2 345 126**
**US-A-4 168 791**

(73) Proprietor: **Tontarelli, Sergio**
**Via Giolitti San. Rocchetto 62**
**I-60022 Castelfidardo (IT)**

(72) Inventor: **Tontarelli, Sergio**
**Via Giolitti San. Rocchetto 62**
**I-60022 Castelfidardo (IT)**

(74) Representative: **Baldi, Claudio**
**Piazza Ghislieri, 3**
**I-60035 Jesi (Ancona) (IT)**

Courier Press, Leamington Spa, England.

## Description

The invention concerns a hook for coat-hangers, equipped with a double-jointed support base.

The hook as characterized in the appended claim has been designed to satisfy the necessity of minimizing the overall dimensions of conventional coat-hangers; it is thus possible to reduce packaging and thus transport costs, as a greater number of hangers will be contained in one same space.

Having established that packing of the hangers usually occurs by opposing two hangers on the same plane and superimposing the hooks so as to reduce the space occupied transversally to a minimum, this invention proposes a hook being connectable to the upper bar of a coat hanger, so that the space occupied transversally by two opposed hangers during packing can be further reduced by a quantity equivalent to the height of the hook itself

Realization of such a hook has been carried out taking into account the necessity of not preventing another possibility of movement, that is the rotation of the hook on a vertical axis, this being a characteristic to be found in most of the hanger hooks on the market, be they in plastic or metal.

Keeping this in mind, a new type of hook has been invented, equipped with a supporting base to be hooked onto the upper bar of the coat-hanger, said base allowing the hook itself to rotate around two orthogonal axes, since this base can rotate, with its hook, around the upper bar of the hanger, so as to determine the collapsibility of the hook, which is also able to rotate in relation to its supporting base around a vertical axis which is in any case perpendicular to the upper bar of the hanger.

U.S. patent —A—4168791 describes and illustrates a hook for coat-hangers having double-jointed rotation around a vertical and horizontal axis as in the case of the above hook.

The vertical stem of the hook for coat-hangers described in the U.S.A. patent ends at the base with a spherical head which is housed by means of a slight pressure into a spherical groove on the neck of the hanger on which there is a further slot above this groove into which the hook stem snaps into place.

In order to use this hook, the coat-hanger must be suitably structured in that it must be fitted with special grooves and slots of appropriate sizes in specific positions for housing and hooking the vertical stem of the hook.

Contrary to the hook described and illustrated in the above U.S. patent, the hook related to this European patent application does not require the coat-hanger neck to have a particular and complex structure in that the coat-hanger neck simply consists of a horizontal crosspiece having a circular cross-section of a suitable diameter.

For clarity, description continues with reference to the attached drawings, shown merely for illustrative purposes, and not restrictive, in which:

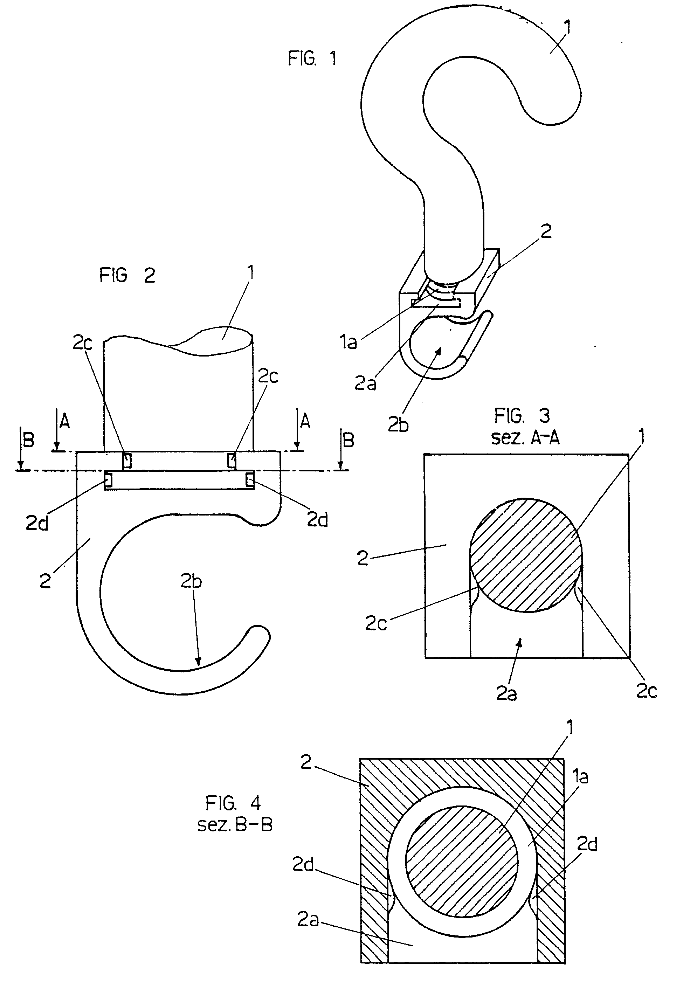

—Fig. 1 is an axonometric representation of the hook, according to the invention;
—Fig. 2 is a side view of the hook, according to the invention;
—Fig. 3 is the A—A section of Fig. 2;
—Fig. 4 is the B—B section of Fig. 2.

Referring to the abovementioned figures, the model herein described consists of a hook 1 having a circular base incised by a ring groove 1a of such shape and size as allow it exact and prismatical coupling within a blind channel 2a having an inverted T cross section and made in a supporting and swivelling base 2, which will preferably be molded in plastic, in one piece only. The base 2 consists of a plate connected to an open ring 2b so its profile should resemble a "C" flattened in its upper portion.

The open ring 2b can be easily hooked onto the neck of the hanger using only a slight pressure sufficient to elastically expand the ring itself. At the connection point, the neck of the hanger should consist of a tract of horizontal bar with a circular cross-section corresponding exactly in its diameter, to the inside diameter of the open ring 2b.

The abovementioned channel 2a is designed for the insertion of the base of the hook 1, which remains fixed as there are two pairs of opposed nibs 2c and 2d on the side edges of the channel 2a; after the nibs have been opened to permit insertion of the base of the hook, they close back onto it and around it with an elastic snap, at the groove 1a and the base end of the hook 1.

With reference to the abovementioned figures, it is now clear how the hook, according to the invention, can be collapsed inside the hanger without losing its freedom of rotation round its longitudinal axis.

In fact, the collapse of the hook is obtained with the rotation of the open ring 2b around the neck of the hanger, whilst the rotation of the hook around its own longitudinal axis is guided by the circular base of the hook itself, said base being fixed and centered within the channel 2a of the supporting base 2.

## Claim

Hook for coat-hangers, the hook (1) being equipped with a double-jointed support base (2), characterized in that the hook (1) terminates in a circular base incised by a ring groove (1a) with which the hook (1) is exactly coupled within an inverted T channel (2a) made on the outer face of said supporting base (2) consisting of a plate connected to an open ring (2b) being connectable to the upper bar of a coat-hanger, the side edges of the channel (2a) having two pairs of opposed nibs (2c) and (2d) which can be elastically deformed during the forced insertion of the base (2) of the hook (1) into the channel (2a) and close, with an elastic snap, behind the base (2) at the ring grove (1a) and at the base end of the hook (1), immediately below the groove (1a) itself.

**Patentanspruch**

Kleiderbügelhaken, wobei der Haken (1), ausgestattet mit einer doppelgelenkigen Halterungsbasis (2), dadurch gekennzeichnet ist, daß der Haken (1) eine runde Unterseite besitzt, in welche eine ringförmige Rille (1a) eingelassen ist, mit der der Haken (1) exakt in eine auf der Außenseite der besagten Halterungsbasis eingelassene Nut (2a) in Form eines umgekehrten "T" eingepaßt ist, wobei die Halterungsbasis (2) einer Platte besteht, die mit einem auf die oberste Stange des Kleiderbügels zu steckenden offenen Ring (2b) verbunden ist. Die Seitenwände der besagten Nut (2a) weisen zwei einander gegenüberliegenden Nasen (2c) und (2d) auf, die zum Einstecken (unter Druck) der Unterseite (2) des Hakens (1) in die Nut (2a) elastisch verformt werden können und die sich mit einem elastischen Schnappen hinter der Halterungsbasis (2), und zwar an der ringförmigen Rille (1a) und an der sich direket unterhalb der Rille (1a) befindlichen Unterseite des Hakens (1) schließen.

**Revendication**

Crochet pour cintres, étant ledit crochet (1) équipé d'une petite base de support (2) avec double articulation, caractérisé par le fait qui le crochet (1) se termine par une base circulaire de laquelle est tirée une gorge annulaire (1a) avec laquelle le crochet (1) s'accouple exactement dans une rainure (2a) qui a la forme d'un "T" renversé, celle-ci étant tirée de la surface extérieure de ladite petite base de support (2), constituée par une plaquétte raccordée à un anneau ouvert (2b), que l'on peut raccorder à la tige la plus haute du cintre, les bords, latéraux de la rainure susmentionnée (2a) ayant deux couples de mentonnets opposés (2c) et (2d) qui peuvent se déformer de manière élastique pendant l'insertion par pression de la base (2) du crochet (1) dans la rainure (2a) et qui se referment avec déclic élastique derrière la base (2), l'un en correspondance de la gorge annulaire (1a) et l'autre à l'extrémité de base du crochet (1) qui se trouve juste en-dessous de cette gorge (1a).

EP 0 215 749 B1

FIG. 1

FIG 2

FIG. 3
sez. A-A

FIG. 4
sez. B-B

1